# EUROPÄISCHE PATENTSCHRIFT

(11) **EP 3 877 112 B1**
(45) Veröffentlichungstag und Bekanntmachung des Hinweises auf die Patenterteilung: **03.01.2024**
(21) Anmeldenummer: 19797227.6
(22) Anmeldetag: 29.10.2019
(51) Int. Cl.: B23K 26/0622, B23K 26/067, G02B 27/09, B23K 26/073, B23K 26/352

(54) **VERFAHREN ZUR STRUKTURIERUNG EINER WALZENOBERFLÄCHE**
METHOD FOR STRUCTURING A ROLLER SURFACE
PROCÉDÉ POUR STRUCTURER UNE SURFACE DE ROULEAU

(30) Priorität: 09.11.2018 DE 102018219190
(43) Veröffentlichungstag der Anmeldung: 15.09.2021
(73) Patentinhaber: ThyssenKrupp Steel Europe AG, 47166 Duisburg (DE); thyssenkrupp AG, 45143 Essen (DE)
(72) Erfinder: LAUER, Benjamin, 66620 Nonnweiler (DE); WISCHMANN, Stefan, 10437 Berlin (DE); KOCH, Martin, 47506 Neukirchen-Vluyn (DE); KOPPLIN, Karl-Heinz, 45239 Essen (DE); SCHULZE-KRAASCH, Folkert, 47179 Duisburg (DE); VOGT, Oliver, 44319 Dortmund (DE)
(74) Vertreter: ThyssenKrupp Steel Europe AG
(86) Internationale Anmeldenummer: PCT/EP2019/079458
(87) Internationale Veröffentlichungsnummer: WO 2020/094450

(56) Entgegenhaltungen:
- EP-A1- 2 768 626
- WO-A1-2018/162356
- DE-A1-102014 110 285
- DE-T2- 60 025 877
- US-A1- 2005 230 369

## Beschreibung

### Stand der Technik

Die vorliegende Erfindung betrifft ein Verfahren zur Strukturierung einer Walzenoberfläche, insbesondere einer Dressierwalze, wobei die Strukturierung durch Laserabtrag erfolgt.

Eine Vorrichtung und ein Verfahren dieser Art ist beispielsweise aus der Druckschrift DE 10 2014 110 285 A1 bekannt. In dem darin vorgeschlagenen Verfahren wird eine derartige Walzenoberfläche durch eine Folge von Laserpulsen bearbeitet, deren räumliche Intensitätsverteilung durch einen Strahlformer modifiziert wird, so dass das auf der Walzenoberfläche bestrahlte Bearbeitungsfeld verändert und insbesondere vergrößert wird.

Bei einem solchen Verfahren besteht das Problem, dass für eine Vergrößerung des bestrahlten Bearbeitungsfelds die Modifizierung der räumlichen Intensitätsverteilung zunehmend aufwändiger wird. Bei einer komplexen Strahlformung sinkt mit größerer Ausleuchtung auch die Effizienz der strahlformenden optischen Elemente. Es ist daher technisch erstrebenswert, eine Vergrößerung der bestrahlten Fläche zu erreichen, ohne durch die intrinsischen Grenzen der Strahlformung eingeschränkt zu sein.

### Offenbarung der Erfindung

Der vorliegenden Erfindung liegt die Aufgabe zugrunde, ein Verfahren zur Verfügung zu stellen, mit dem sich eine Vergrößerung der durch den Laserstrahl bestrahlten Fläche erzielen lässt.

Gelöst wird diese Aufgabe durch ein Verfahren gemäß Anspruch 1. Für die Ausführung des Verfahrens kann eine Vorrichtung zur Strukturierung einer Walzenoberfläche verwendet werden, die jedoch nicht Teil des beanspruchten Gegenstands ist, wobei die Vorrichtung eine Laserquelle und ein optisches System aufweist, wobei die Laserquelle zur Erzeugung von Laserpulsen ausgebildet ist, wobei das optische System mindestens einen Strahlformer, mindestens einen Strahlteiler und eine Fokussiereinheit aufweist, wobei die Kombination aus Strahlformer und Strahlteiler zwischen der Laserquelle und der Fokussiereinheit angeordnet ist.

Bei der Vorrichtung werden die von der Laserquelle erzeugten Pulse durch das Zusammenspiel mindestens eines Strahlformers und mindestens eines Strahlteilers in ihrer Intensitätsverteilung manipuliert, wobei die Anordnung/Reihenfolge des Strahlformers und Strahlteilers im Strahlengang, heißt, dass zuerst der Strahlformer und anschließend der Strahlteiler durchstrahlt wird, bei anspruchsgemäßer Verwendung, durch die Definition des ersten und zweiten Schritts in Anspruch 1 festgelegt ist, welche eine Änderung im Phasenraum bewirken und durch die Fokussiereinheit in den Ortsraum (Abbildung) überführt werden, bevor sie auf die Walzenoberfläche treffen und dort durch Laserablation eine Strukturierung des bestrahlten Bereichs bewirken. Die Fokussiereinheit ist in einer einfachen Ausführungsform als optische Sammellinse ausgeführt. In einem Beispiel ist diese vorzugsweise ein f-theta Objektiv, welche aus einem oder mehreren Linsen besteht. f-theta Objektive sind Stand der Technik. Denkbar ist auch ein optisches Element vorzusehen, welches den mindestens einen Strahlformer und den mindestens einen Strahlteiler vereint bzw. in welchem Strahlformer und Strahlteiler integriert sind. Die Vorrichtung kann beispielsweise eine Aufnahmevorrichtung aufweisen, in die die zu strukturierende Walze eingelegt wird. Der Laserstrahl wird dann durch das optische System auf einen Bearbeitungspunkt oder einer Bearbeitungsfläche der Walzenoberfläche gerichtet. Um eine im Wesentlichen vollständige Strukturierung der gesamten Walzenoberfläche zu erreichen, muss dieser Bearbeitungspunkt oder die Bearbeitungsfläche, bzw. die Walzenoberfläche während der Bearbeitung verändert werden, so dass im Wesentlichen die gesamte Walze abgetastet wird und die einzelnen, durch Laserpulse abgetragenen Bereiche eine flächendeckende Strukturierung der Walzenoberfläche bilden. Diese Bewegung kann beispielsweise durch eine optische Ablenkeinheit und eine Rotation der Walze erzeugt werden, wobei die Ablenkeinheit, beispielsweise in Form eines drehbaren Spiegels den Laserstrahl in axialer Richtung (auf die Walze bezogen) abtastet, während die Rotation der Walze eine Abtastung in azimutaler Richtung bewirkt. Für weitere Details bezüglich der technischen Realisierung sei hier auf die oben genannte Druckschrift DE 10 2014 110 285 A1 verwiesen.

Für eine effektive Bearbeitung ist ein optimaler Energieeintrag in die Oberfläche erstrebenswert. Die pro Fläche eingebrachte Energie (Fluenz in J/cm²), bestimmt direkt die Menge an abgetragenem Material, wobei jedoch die Abtragrate bezogen auf die eingesetzte Leistung (in mm³/(min*W)) in der Regel ein Maximum in einem bestimmten Fluenzbereich aufweist. Für höhere Leistungen sinkt die Effizienz des Abtragungsvorgangs, so dass für jede weitere Steigerung der Abtragrate eine überproportional große Leistungssteigerung erforderlich ist.

Der Punkt maximaler Effizienz wird im Folgenden auch mit optimaler Fluenz oder optimalem Energieeintrag bezeichnet. Die Vorrichtung ermöglicht es, den Strahl so zu manipulieren, dass die Intensität der Laserpulse derart auf die Walzenoberfläche verteilt wird, dass zum einen eine möglichst große Fläche gleichzeitig bestrahlt wird und zum anderen in den abzutragenden Punkten möglichst der optimale Energieeintrag erfolgt. Dazu wird der Laserstrahl durch den mindestens einen Strahlformer zunächst so modifiziert, dass der Energieeintrag sich in einer damit belichteten Fläche in bestimmten Bereichen konzentriert, so dass an diesen Stellen entsprechend viel Material abgetragen wird. Die Intensität in den anderen Bereichen der belichteten Fläche nimmt entsprechend ab, so dass dort nur wenig oder gar kein Material abgetragen wird. Auf diese Weise wird bereits durch den Strahlformer alleine eine Umverteilung mittels räumlicher Phasenmodulation bzw. Konzentration der Strahlungsenergie erreicht und die für die Abtragung wirksame Fläche vergrößert. Der Strahlformer stellt ein optisches Element dar und kann beispielsweise durch ein diffraktives optisches Element (DOE) oder einen räumlichen Modulator für Licht (Spatial Light Modulator, SLM) gebildet werden. Um die belichtete Fläche weiter zu vergrößern, ist bei der Vorrichtung weiterhin mindestens ein Strahlteiler im Strahlengang zwischen Laserquelle und Fokussiereinheit vorgesehen. Auf diese Weise lässt sich beispielsweise der durch den Strahlformer modifizierte Laserstrahl in vorteilhaft einfacher Weise vervielfältigen. Dabei bildet die räumliche Intensitätsverteilung des durch den Strahlformer modulierten Pulses eine Elementareinheit, die durch den Strahlteiler vervielfacht wird und so einen entsprechend größeren Bereich auf der Walze belichtet. Der mindestens eine Strahlformer und der mindestens eine Strahlteiler sollten dabei vorzugsweise so gewählt bzw. eingestellt werden, dass in den Bereichen der belichteten Fläche, in denen sich die Strahlungsleistung konzentriert, möglichst die optimale Fluenz erreicht wird. Durch den unterschiedlichen Abtrag bildet sich eine reliefartige Modulierung der Oberfläche, wobei die genaue Form dieser Modulierung durch das Zusammenspiel des erzeugten Laserstrahls, des Strahlformers, des Strahlteilers und des Walzenmaterials bestimmt ist und in fast beliebiger Weise eingestellt werden kann.

Vorteilhafte Ausgestaltungen und Weiterbildungen der Erfindung sind den Unteransprüchen, sowie der Beschreibung unter Bezugnahme auf die Zeichnungen entnehmbar.

Gemäß der Erfindung ist der Strahlformer derart ausgebildet, dass durch eine Modulation des räumlichen Intensitätsprofils eines Laserstrahls ein modulierter Laserstrahl erzeugt wird. Der Strahlformer ist dabei vorzugsweise als diffraktives optisches Element (DOE) oder einen Spatial Light Modulator (SLM) ausgebildet. Bei einem diffraktiven optischen Element handelt es sich um einen mikrostrukturierten Glasträger, über den die Wellenfront durch Beugung an der Mikrostruktur eine Phasenmodulation erfährt, die durch Interferenz zu der gewünschten räumlichen Intensitätsverteilung führt. Durch einen Spatial Light Modulator lässt sich eine ähnliche Manipulation der Intensitätsverteilung erreichen, wobei jedoch die Modulation direkt und in fast beliebiger Weise kontrolliert werden kann. Der Spatial Light Modulator kann dazu beispielsweise eine Pixelmatrix aufweisen, deren Pixel sich elektronisch oder optisch so ansteuern lassen, dass das durch sie hindurchtretende Laserlicht in der gewünschten Weise verändert wird.

Gemäß einer der bevorzugten Ausführungsform der Erfindung ist der Strahlteiler derart ausgebildet, dass durch eine Teilung des räumlich phasenmodulierten Laserstrahls und anschließender Fokussierung ein Intensitätsmuster auf der Walzenoberfläche erzeugt wird. Der Kerngedanke der Erfindung besteht darin, durch einen Strahlteiler eine Vervielfachung des belichteten Bereichs auf der Walzenoberfläche zu schaffen. Dazu wird der, durch den Strahlformer modulierte Laserstrahl durch den Strahlteiler in mehrere Teilstrahlen aufgeteilt, die gleichzeitig auf der Walzenoberfläche auftreffen und zusammen ein Intensitätsmuster auf dem bestrahlten Bereich bilden. Das so erzeugte Intensitätsmuster bedeckt vorteilhafterweise eine Fläche, die eine größere Ausdehnung aufweist als die Fläche, die durch einen ungeteilten modulierten Laserstrahl belichtet wird. Der Strahlteiler ist dabei vorzugsweise als diffraktives optisches Element (DOE) oder einen Spatial Light Modulator (SLM) ausgebildet.

Gemäß einer weiteren bevorzugten Ausführungsform der Erfindung wirken der Strahlformer und der Strahlteiler so zusammen, dass ein zusammenhängendes Intensitätsmuster auf der Walzenoberfläche erzeugt wird. Durch das Einbringen des Strahlteilers in den Strahlengang zwischen Laserquelle und Fokussiereinheit, wird ein Intensitätsmuster auf der Walzenoberfläche erzeugt, welches im Wesentlichen durch Vervielfältigung aus dem Intensitätsprofil des modulierten Laserstrahls entsteht. Der Strahlteiler erzeugt also durch Replikation aus einem modulierten Laserstrahl eine Anordnung aus mehreren modulierten Laserspots auf der Walzenoberfläche. Durch die Wahl und relative Positionierung bzw. Ausrichtung von Strahlformer und Strahlteiler lässt sich die Form des Intensitätsmusters in einfacher Weise beeinflussen. Vorzugsweise berühren sich die Laserspots und liegen aneinander an, so dass sich ein zusammenhängendes Intensitätsmuster ergibt. Denkbar ist auch, dass ein solches zusammenhängendes Muster durch Überlappung der Laserspots erzeugt wird. Vorteilhafterweise lässt sich mit einem derartigen zusammenhängenden Intensitätsmuster durch sukzessive Abtastung der Walzenoberfläche eine durchgehende und lückenlose Strukturierung erreichen.

Gemäß einer weiteren bevorzugten Ausführungsform der Erfindung wirken der Strahlformer und der Strahlteiler so zusammen, dass ein nahtlos kachelbares Intensitätsmuster auf der Walzenoberfläche erzeugt wird. Durch ein nahtlos kachelbares Intensitätsmuster lässt sich vorteilhafterweise eine durchgehende und lückenlose Strukturierung der Walzenoberfläche durch eine einfache, überlappungsfreie Aneinanderreihung der belichteten Flächen erreichen. Das durch das Intensitätsmuster erzeugte Abtragungsmuster bildet dabei die Wiederholungseinheit, die sich durch sukzessive Neupositionierung des Laserstrahls zu einer flächenfüllenden Strukturierung der Walzenoberfläche fortsetzen lässt.

Gemäß einer weiteren bevorzugten Ausführungsform der Erfindung weist das Intensitätsmuster einen ersten Bereich und einen zweiten Bereich auf, wobei der Energieeintrag in die Walzenoberfläche im ersten Bereich geringer ist als im zweiten Bereich und der erste Bereich im Wesentlichen vom zweiten Bereich umgeben oder eingeschlossen ist. Dies ist auch mit mehr als zwei Bereichen unterschiedlichen Energieeintrags umsetzbar. Durch den unterschiedlichen Energieeintrag entsteht durch die Abtragung ein lokales Höhenprofil, bei dem die Stellen höherer Intensität Täler und/oder Gräben in der Oberfläche erzeugen, während in den Bereichen geringer Intensität die Oberfläche nur geringfügig oder im Wesentlichen gar nicht abgetragen wird. Bei einem Bereich geringer Intensität, der von einem Bereich erhöhter Intensität umgeben oder eingeschlossen ist, ergibt sich auf diese Weise eine lokale Erhebung oder vorzugsweise eine Mehrzahl von lokalen Erhebungen, wodurch sich vorteilhafterweise eine im Prinzip beliebig komplexe Strukturierung der Oberfläche erreichen lässt. Denkbar ist auch, dass sich Bereiche niedriger und hoher Intensität abwechseln, so dass der Walzenoberfläche an dieser Stelle ein Rippelprofil aufgeprägt wird.

Gemäß einer weiteren bevorzugten Ausführungsform der Erfindung ist der Energieeintrag in die Walzenoberfläche im ersten Bereich so gewählt, dass kein oder nur geringfügiger Materialabtrag stattfindet. Die erfindungsgemäße Vergrößerung der zeitgleich abgetragenen Fläche wird im Wesentlichen durch eine geschickte Umverteilung der Strahlungsintensität innerhalb der belichteten Fläche erreicht. Eine maximale Strukturtiefe lässt sich dadurch erreichen, dass sich in der belichteten Fläche Bereiche mit starkem Abtrag mit Bereichen abwechseln, in denen nur geringfügig Material abgetragen wird. Vorzugsweise wird in diesen Bereichen überhaupt kein Material abgetragen. Der geringe Abtrag lässt sich dadurch realisieren, dass das Intensitätsmuster entsprechend Bereiche mit einer Intensität aufweist, die keinen oder nur einen geringen Materialabtrag hervorrufen. Dadurch lässt sich vorteilhafterweise eine erhöhte Strukturtiefe der bearbeiteten Fläche erreichen.

Gemäß einer weiteren bevorzugten Ausführungsform der Erfindung ist der Energieeintrag in die Walzenoberfläche im zweiten Bereich so gewählt, dass das Verhältnis des Materialabtrags zur Strahlungsleistung maximiert wird. Da die auf die eingebrachte Leistung bezogene Abtragungsrate in der Regel ein Maximum aufweist, das einer maximal effizienten Abtragung entspricht, ist es vorteilhaft, das Intensitätsmuster durch Wahl bzw. Einstellung des Strahlformers und des Strahlteilers so zu gestalten, dass sich in den Bereichen hoher Intensität die optimale Fluenz ergibt. Dadurch wird vorteilhafterweise eine maximal effektive Abtragung des Walzenmaterials erreicht. Vorzugsweise wechseln sich in dem Intensitätsmuster Bereiche mit optimaler Fluenz mit Bereichen ab, in denen die Intensität möglichst gering oder Null ist. Auf diese Weise lässt sich vorteilhafterweise eine optimale Umverteilung der Strahlungsintensität und eine entsprechend optimale Materialbearbeitung erreichen.

Die eingangs formulierte technische Aufgabe der Erfindung wird, wie bereits erwähnt, durch ein Verfahren zur Strukturierung einer Walzenoberfläche gelöst, wobei das Verfahren die Schritte umfasst, die in Anspruch 1 definiert werden. Weitere Ausführungsformen des Verfahrens werden durch die abhängigen Ansprüche definiert.

Weitere Einzelheiten, Merkmale und Vorteile der Erfindung ergeben sich aus den Zeichnungen, sowie aus der nachfolgenden Beschreibung einer bevorzugten Ausführungsform anhand der Zeichnungen. Die Zeichnungen illustrieren dabei lediglich eine beispielhafte Ausführungsform der Erfindung, welche den Erfindungsgedanken nicht einschränkt. In jedem Fall wird die Erfindung einzig durch den Schutzumfang der Ansprüche definiert.

### Kurze Beschreibung der Zeichnungen

- **Figur 1**: zeigt den schematischen Aufbau einer Vorrichtung zur Strukturierung einer Walzenoberfläche gemäß eines Beispiels, das nicht unter den Schutzumfang der Ansprüche fällt.

- **Figur 2a**: zeigt schematisch eine Intensitätsverteilung eines modulierten Laserstrahls gemäß einer beispielhaften Ausführungsform der Erfindung.
- **Figur 2b**: zeigt schematisch ein Intensitätsmuster auf der Walzenoberfläche gemäß einer beispielhaften Ausführungsform der Erfindung.
- **Figur 3**: zeigt eine Strukturierung der Walzenoberfläche, die sich durch modulierte Laserstrahlen erzeugen lässt.
- **Figur 4**: zeigt schematisch eine mögliche Strukturierung der Walzenoberfläche mittels der Kombination aus einem Strahlformer und einem Strahlteiler.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

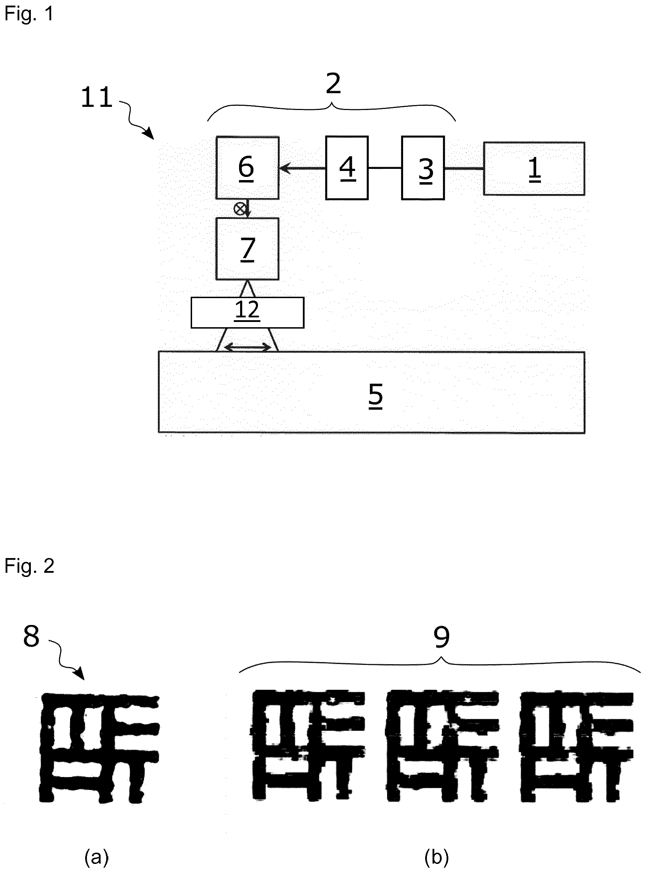

In **Figur 1** ist schematisch eine Vorrichtung 11 zur Strukturierung einer Walzenoberfläche gemäß eines nicht beanspruchten Beispiels abgebildet, wobei die erwähnten Elemente und Elementkombinationen der Vorrichtung zur Ausführung des erfindungsgemäßen Verfahrens verwendet werden können. Die Vorrichtung 11 umfasst eine Laserquelle 1, die einen gepulsten Laserstrahl aussendet, der ein optisches System 2 durchläuft und auf der Oberfläche einer sich drehenden Walze 5 einen Materialabtrag hervorruft. Das optische System 2 weist dabei mindestens einen Strahlformer 3, mindestens einen Strahlteiler 4 und eine Fokussiereinheit 12 auf, durch die der Laserstrahl so manipuliert wird, dass sich auf der Walzenoberfläche ein möglichst großer belichteter Bereich bildet und der zugehörige lokale Energieeintrag in die Oberfläche zu einer maximal effizienten Materialabtragung führt. Zu diesem Zweck wird die räumliche Intensitätsverteilung des Laserstrahls durch den Strahlformer 3 so verändert, dass sich die Intensität in bestimmten Bereichen konzentriert, während sich gleichzeitig Bereiche bilden, in denen die Intensität Null oder nahezu Null ist. Diese räumliche Umverteilung der Strahlungsintensität führt zu einer Vergrößerung des räumlichen Intensitätsprofils bei gleichbleibender Gesamtstrahlungsleistung. Der so modulierte Laserstrahl wird dann durch den Strahlteiler 4 in zwei oder mehrere Teilstrahlen aufgeteilt, wobei Strahlformer 3 und Strahlteiler 4 eine Änderung im Phasenraum bewirken, welche durch die Fokussiereinheit 12 in den Ortsraum (Abbildung) überführt wird, die durch den Rotationsausgleich 6 und den Scanner 7 auf die Walze 5 gelenkt werden, wo sie gleichzeitig auftreffen und ein gemeinsames Intensitätsmuster 9 auf der Oberfläche bilden. Das Intensitätsmuster 9 ist vorteilhafterweise so beschaffen, dass in den Bereichen hoher Konzentration ein optimaler Energieeintrag erzeugt wird. Das heißt, dass die lokale Intensität so gewählt ist, dass sich ein maximaler Materialabtrag pro eingebrachter Leistung ergibt. In den Bereichen geringer Intensität wird dagegen wenig oder vorzugsweise gar kein Material abgetragen, so dass sich durch den Abtrag ein, dem Intensitätsmuster 9 entsprechendes Höhenprofil auf der Oberfläche ergibt. Die dargestellte Form weist neben der Kombination aus Strahlformer 3 und Strahlteiler 4 weiterhin einen Rotationsausgleich 6 und eine Scaneinheit 7 auf. Die beiden Komponenten 6 und 7 führen im Zusammenspiel mit der Drehung der Walze 5 die präzise Positionierung der Laserpulse auf der Walzenoberfläche aus. Die Scaneinheit 7 tastet dabei die Walze 5 in axialer Richtung ab, so dass durch die dichte Aneinanderreihung der Abtragstellen eine strukturierte Zeile auf der Oberfläche entsteht. Um den durch die Drehung der Walze 5 hervorgerufenen Versatz auszugleichen, führt der Rotationsausgleich 6 eine Auslenkung in (bezogen auf die Walze) azimutaler Richtung durch, durch die dieser Versatz kompensiert wird, so dass eine in axialer Richtung geradlinige strukturierte Zeile entsteht. Die Funktionen der beiden Komponenten 6 und 7 können vorzugsweise auch von einer gemeinsamen Einheit übernommen werden, die sowohl die Ablenkung in axialer Richtung, als auch in azimutaler Richtung leistet. Für weitere technische Details der Laserquelle 1, des Strahlformers 3, des Rotationsausgleichs 6 und des Scanners 7 sei auf die Druckschrift DE 10 2014 110 285 A1 verwiesen, deren technische Lehre bezüglich dieser Punkte analog auf die beschriebene Vorrichtung übertragen werden kann.

In **Figur 2a** ist schematisch eine Intensitätsverteilung 8 eines modulierten Laserstrahls dargestellt. Der Laserstrahl wird durch einen Strahlformer so modifiziert, dass seine räumliche Intensitätsverteilung dem abgebildeten Muster entspricht. In der Abbildung sind die Bereiche hoher Intensität schwarz dargestellt, während die Bereiche geringer bzw. verschwindender Intensität weiß dargestellt sind. Durch den Strahlformer 3 wird die Intensität des vom Laser 1 erzeugten Strahlprofils räumlich so umverteilt, dass sie sich in den schwarz dargestellten Bereichen konzentriert. Fällt der so modifizierte Puls direkt (d.h. ohne zusätzlich den Strahlteiler 4 zu durchlaufen) auf die Walzenoberfläche, wird in den Bereichen hoher Intensität Material aus der Oberfläche entfernt, während die Oberfläche in den Bereichen niedriger Intensität weitgehend oder vollständig unverändert bleibt.

In **Figur 2b** ist schematisch ein Intensitätsmuster 9 dargestellt, wie es sich mit der Kombination aus einem Strahlformer 3 und einem Strahlteiler 4 erzeugen lässt. Dabei entspricht die Anordnung/Reihenfolge im Strahlengang, bei anspruchsgemäßer Verwendung, der Definition des ersten und zweiten Schritts in Anspruch 1. Andere Anordnungen/Reihenfolgen sind möglich, fallen aber nicht unter den Schutzumfang der Ansprüche. Es können auch mehr als nur ein Strahlformer und/oder Strahlteiler vorgesehen sein (hier nicht dargestellt). Die modulierte Intensitätsverteilung aus **Figur 2a****,** bzw. das dadurch hervorgerufene Abtragungsprofil bildet dabei die Elementarzelle der Strukturierung und wird durch den Strahlteiler 4 auf drei modulierte Laserspots aufgeteilt, so dass sich ein Intensitätsmuster 9 aus drei Elementarzellen ergibt und die belichtete Fläche auf diese Weise vorteilhafterweise verdreifacht wird, ohne dass dazu eine zusätzliche Modulierung der Intensität durchgeführt werden muss. In **Figur 2b** weisen die drei Elementarzellen einen räumlichen Abstand zueinander auf, der sich jedoch durch eine entsprechende Einstellung von Strahlformer 3 und Strahlteiler 4 beliebig verändern lässt, so dass die Elementarzellen einander berühren oder auch überlappen können. Das von den drei Elementarzellen gebildete Intensitätsmuster 9 ruft an den Stellen hoher Intensität einen Materialabtrag auf der Walzenoberfläche hervor. Bevorzugterweise ist dabei die Maximalintensität so eingerichtet, dass sich eine optimale Fluenz und damit eine maximal effektive Abtragung ergeben. Der Laserstrahl, der das Intensitätsmuster 9 erzeugt, kann nun beispielsweise durch die Drehung der Walze und die Ablenkeinheiten 6 und 7 über die Walzenfläche geführt werden, so dass sich an den bestrahlten Stellen ein, dem Intensitätsmuster 9 entsprechendes Abtragprofil ergibt und auf diese Weise im Wesentlichen die gesamte Walzenfläche strukturiert werden kann.

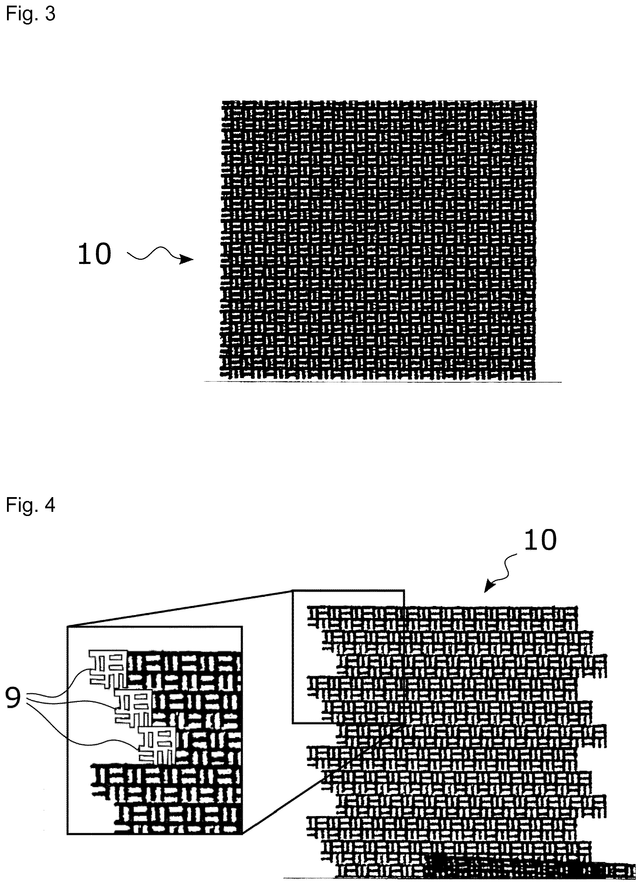

In **Figur 3** ist schematisch eine Strukturierung 10 abgebildet, die sich durch Wiederholung der Elementarzelle in **Figur 2a** ergibt. An jedem Bearbeitungspunkt oder an jeder Bearbeitungsfläche auf der Walzenoberfläche wird durch die Intensitätsverteilung 8 des modulierten Laserstrahles eine Strukturierung erzeugt, so dass sich in jedem Bearbeitungsschritt (d.h. zu jeder Positionierung des Laserspots auf der Oberfläche) ein Flächenstück der Ausdehnung einer Elementarzelle bearbeiten lässt. Durch die Abtastung der Walzenfläche ergibt sich die dargestellte, flächenfüllende Strukturierung 10.

In **Figur 4** ist schematisch eine Strukturierung 10 abgebildet, die sich durch Wiederholung der drei Elementarzellen in **Figur 2b** ergibt. Zur besseren Sichtbarkeit ist der linke obere Teil der Strukturierung 10 vergrößert dargestellt und das durch Strahlformer 3 und Strahlteiler 4 erzeugte Intensitätsmuster 9 aus drei Elementarzellen kenntlich gemacht. Im Vergleich zu **Figur 2b** wirken hier der Strahlformer 3 und der Strahlteiler 4 so zusammen, dass sich die drei Elementarzellen berühren. Dies lässt sich beispielsweise durch eine einfache Verdrehung des Strahlteilers 4 gegenüber dem Strahlformer 3 erreichen, so dass die drei Elementarzellen in **Figur 2b** jeweils einzeln verkippen und sich in der in **Figur 4** dargestellten Weise berühren. Das Intensitätsmuster 9 ist hier insbesondere nahtlos kachelbar, d.h. durch eine einfache Wiederholung des Musters 9 lässt sich im Wesentlichen die gesamte Fläche der Walze 5 lückenlos strukturieren. Durch die Verdreifachung der Elementarzelle wird eine dreifach größere Bearbeitungsfläche geschaffen, so dass sich der zeitliche Aufwand für die Strukturierung vorteilhafterweise entsprechend verkürzt.

### BEZUGSZEICHENLISTE

1 Laserquelle
2 optisches System
3 Strahlformer
4 Strahlteiler
5 Walze
6 Rotationsausgleich
7 Scanner
8 Intensitätsverteilung des modulierten Laserstrahles
9 Intensitätsmuster auf der Walzenoberfläche
10 Strukturierung der Walzenoberfläche
11 Vorrichtung zur Strukturierung einer Walzenoberfläche
12 Fokussiereinheit

## Patentansprüche

1. Verfahren zur Strukturierung einer Walzenoberfläche, wobei ein von einer Laserquelle (1) erzeugter Laserpuls auf die Walzenoberfläche gelenkt wird und auf der Walzenoberfläche einen Materialabtrag bewirkt, wobei dem von der Laserquelle (1) erzeugten Laserpuls in einem ersten Schritt durch mindestens einen Strahlformer (3) eine Modulation eines räumlichen Intensitätsprofils aufgeprägt wird, wobei der modulierte Laserstrahl in einem zweiten Schritt durch mindestens einen Strahlteiler (4) derart auf mindestens zwei Teilstrahlen aufgeteilt wird, dass die mindestens zwei Teilstrahlen ein Intensitätsmuster (9) auf der Walzenoberfläche bilden, wobei Strahlformer (3) und Strahlteiler (4) eine Änderung im Phasenraum bewirken, welche durch eine Fokussiereinheit (12) in den Ortsraum überführt wird.

2. Verfahren nach Anspruch 1, wobei die Modulation des räumlichen Intensitätsprofils und die Aufteilung auf mindestens zwei Teilstrahlen derart erfolgt, dass das Intensitätsmuster (9) auf der Walzenoberfläche einen ersten Bereich und einen zweiten Bereich aufweist, wobei ein Energieeintrag in die Walzenoberfläche im ersten Bereich geringer ist als im zweiten Bereich und der erste Bereich im Wesentlichen vom zweiten Bereich umgeben oder eingeschlossen ist.

3. Verfahren nach Anspruch 2, wobei der Energieeintrag in die Walzenoberfläche im zweiten Bereich so gewählt ist, dass das Verhältnis des Materialabtrags zur Strahlungsleistung maximiert wird.

4. Verfahren nach einem der vorgenannten Ansprüche, wobei die Walzenoberfläche während des Verfahrens bewegt, insbesondere gedreht wird.

5. Verfahren nach einem der vorgenannten Ansprüche, wobei die mindestens zwei Teilstrahlen in einem, auf den zweiten Schritt folgenden dritten Schritt eine Ablenkung erfahren, durch die die Walzenoberfläche in einer axialen Richtung abgetastet wird.

## Claims

1. Method for structuring a roller surface, wherein a laser pulse generated by a laser source (1) is directed at the roller surface and brings about material ablation on the roller surface, wherein a modulation of a spatial intensity profile is impressed on the laser pulse generated by the laser source (1) by at least one beam shaper (3) in a first step, wherein the modulated laser beam is split into at least two component beams by at least one beam splitter (4) in a second step, in such a way that the at least two component beams form an intensity pattern (9) on the roller surface, wherein beam shaper (3) and beam splitter (4) bring about a change in phase space, which is transferred into position space by a focusing unit (12).

2. Method according to Claim 1, wherein the modulation of the spatial intensity profile and the split into at least two component beams is implemented in such a way that the intensity pattern (9) on the roller surface has a first region and a second region, wherein an energy input into the roller surface in the first region is lower than in the second region and the first region is substantially surrounded or enclosed by the second region.

3. Method according to Claim 2, wherein the energy input into the roller surface in the second region is chosen such that the ratio of the material ablation to the radiant flux is maximized.

4. Method according to any of the preceding claims, wherein the roller surface is moved, in particular rotated, during the method.

5. Method according to any of the preceding claims, wherein, in a third step following the second step, the at least two component beams undergo a deflection, by means of which the roller surface is scanned in an axial direction.

## Revendications

1. Procédé de structuration d'une surface de rouleau, une impulsion laser générée par une source laser (1) étant dirigée sur la surface de rouleau et provoquant un enlèvement de matière sur la surface de rouleau, une modulation d'un profil d'intensité spatiale étant conférée, dans une première étape, par au moins un conformateur de faisceau (3) à l'impulsion laser générée par la source laser (1), le faisceau laser modulé étant divisé, dans une deuxième étape, en au moins deux faisceaux partiels par au moins un séparateur de faisceau (4) de manière à ce que les au moins deux faisceaux partiels forment un motif d'intensité (9) sur la surface de rouleau, le conformateur de faisceau (3) et le séparateur de faisceau (4) provoquant dans l'espace de phase une variation qui est transférée dans l'espace local par une unité de focalisation (12).

2. Procédé selon la revendication 1, la modulation du profil d'intensité spatial et la division en au moins deux faisceaux partiels étant effectuée de manière à ce que le motif d'intensité (9) comporte sur la surface de rouleau une première zone et une deuxième zone, un apport d'énergie dans la surface de rouleau étant inférieur dans la première zone à celui dans la deuxième zone et la première zone étant sensiblement entourée ou enfermée par la deuxième zone.

3. Procédé selon la revendication 2, l'apport d'énergie dans la surface de rouleau dans la deuxième zone étant choisi de telle sorte que le rapport entre l'enlèvement de matière et la puissance de rayonnement soit maximisé.

4. Procédé selon l'une des revendications précédentes, la surface de rouleau étant déplacée, en particulier tournée, pendant le procédé.

5. Procédé selon l'une des revendications précédentes, les au moins deux faisceaux partiels subissant dans une troisième étape suivant la deuxième étape une déviation permettant de balayer la surface de rouleau dans une direction axiale.
